# EUROPEAN PATENT SPECIFICATION

(11) **EP 0 783 643 B1**
(45) Date of publication and mention of the grant of the patent: **20.07.2005**
(21) Application number: 95930416.3
(22) Date of filing: 19.09.1995
(51) Int. Cl.: F16K 31/126, G05D 23/12, F16K 47/04

(54) **VALVE FOR A SYSTEM HAVING A HEAT CARRYING MEDIUM**
VENTIL FÜR EIN WÄRMETRÄGERSYSTEM
VANNE POUR SYSTEME A MILIEU CALOPORTEUR

(30) Priority: 23.09.1994 DK 109994
(43) Date of publication of application: 16.07.1997
(73) Proprietor: FRESE A/S, 4200 Slagelse (DK)
(72) Inventor: GYLOV, Hans, Henrik, DK-2840 Holte (DK); JORGENSEN, Ole, DK-4200 Slagelse (DK); MOLLER, Carsten, DK-4200 Slagelse (DE)
(74) Representative: Lund, Preben
(86) International application number: PCT/DK1995/000374
(87) International publication number: WO 1996/009485

(56) References cited:
- DE-C- 2 615 895
- US-A- 5 178 324

## Description

This invention concerns a valve assembly for a system having a heat-carrying medium which flows through a number of heat exchangers in the system, said valve assembly having a thermostat valve with a housing comprising an inlet and an outlet, a spindle with a seal which can be displaced by a thermostat bellows and which, depending on the expansion/contraction of the thermostat bellows and against the force of a spring which surrounds the spindle, can respectively close and open an opening with a seating in a transverse wall in the housing between the inlet and the outlet.

A central heating plant with thermostat valves and a differential pressure valve is known from U.S. Patent No. 5,178,324, said plant being configured in such a manner that it is possible to control the flow in the entire plant, a single part of the plant or in several zone-divided sections of the plant.

This plant comprises several heat exchangers each provided with its own thermostat valve, said heat exchangers being intended to be placed in a number of at least one in each room in a building, and where the valves are disposed in the piping of the plant.

In central heating plants it is important that the water is distributed through the plant in a pre-calculated proportion so that the dimensioned heat requirements of the individual heat exchangers are taken into consideration.

It is also important that the heat-carrying liquid remains in the heat exchangers for a period of time which is long enough to allow a reasonable amount of heat to be dissipated in the rooms of the building which are to be heated by the heat exchangers, which can be ensured by means of a differential pressure valve placed in the individual branches of the plant, in that this valve can regulate the flow of the heat-carrying fluid.

Furthermore, it is important that the differential pressure across the individual heat exchangers is so low that noise does not arise in the valves, in that such noise can cause inconvenience, either directly or by transmission through the piping system.

In the individual rooms, the flow of heat-carrying liquid through the heat exchanger or each of the heat exchangers can be controlled by means of thermostatic valves which, depending on the temperature in the room, can open more or less to allow flow through the heat exchanger(s) so that the emission of heat to the rooms can be held within those limits which are determined by the accuracy of the thermostatic valves, and by the temperature which the user of the room desires to maintain by the adjustment of the thermostatic valve or valves.

When ordinary thermostatic valves are mounted in a length of piping which leads the heat-carrying medium from a heat exchanger to the subsequent heat exchangers, each of these thermostatic valves will be dependent on the others. Thus if ten thermostatic valves are mounted in a length of piping, and nine of these are closed, the differential pressure across the open valve will be increased. This results in an increase in the flow through the associated heat exchanger, and the increased flow can also give rise to disturbing noise.

This situation can arise, for example, at times of the year when the incidence of sunlight makes heating unnecessary. If there is also opened a window in that room in which the open thermostatic valve is mounted, the associated heat exchanger will receive a considerably greater flow than would otherwise be the case.

It is also difficult to achieve a mutual balance between the individual pipes in the building, the reason being that the flow will change depending on the differential pressure. Today, this drawback is overcome by providing each length of piping with an extra valve which is carefully adjusted to ensure the balance between the individual pipes.

A thermostat controlled regulating valve is described in DE-C3-2615895, which valve comprises a pre-setting for the setting of the flow through the valve.

The object of the present invention is therefore to improve a valve of the kind described so that the above-mentioned drawbacks of a heating plant can be avoided.

This object is achieved by means of a valve assembly of the above-mentioned kind, said valve assembly according to the invention being characteristic in that the valve assembly is further provided with a piston which is controlled by a differential pressure for the regulation of the differential pressure of the heat-carrying medium across the adjustable pre-setting, and the thermostatic valve consisting of the seating and the seal between the inlet and the piston, and that the thermostatic valve is arranged to be able to cut off the flow between the inlet and the outlet independently of the adjustable pre-setting.

The piston in the valve assembly according to the invention thus maintains a constant differential pressure across the adjustable pre-setting and across the seating and the seal together.

It is hereby achieved that the valve assembly according to the invention can be adjusted to allow only a predetermined maximum amount of the heat-carrying medium to flow through the valve independently of the remaining heat exchangers and pressure conditions in the plant. If the differential pressure is increased, for example because one or more of the remaining valves on a length of piping are closed, this will not result in an increase in the flow through the individual heat exchanger.

Moreover, in certain cases a reduction in noise can be achieved, in that the pressure/flow is reduced in three steps, whereas in the ordinary thermostatic valves this is effected in one or two steps.

Furthermore, it will not be necessary to mount an extra valve in order to mutually balance the individual pipe lengths.

The dependent claims disclose expedient arrangements of the valve assembly according to the invention.

In the following, the valve assembly according to the invention will be described in more detail with reference to the drawing, where
- Fig. 1: schematically shows a commonly known, double pipe heating plant, and
- Fig. 2: shows a section through an embodiment of the valve assembly according to the invention.

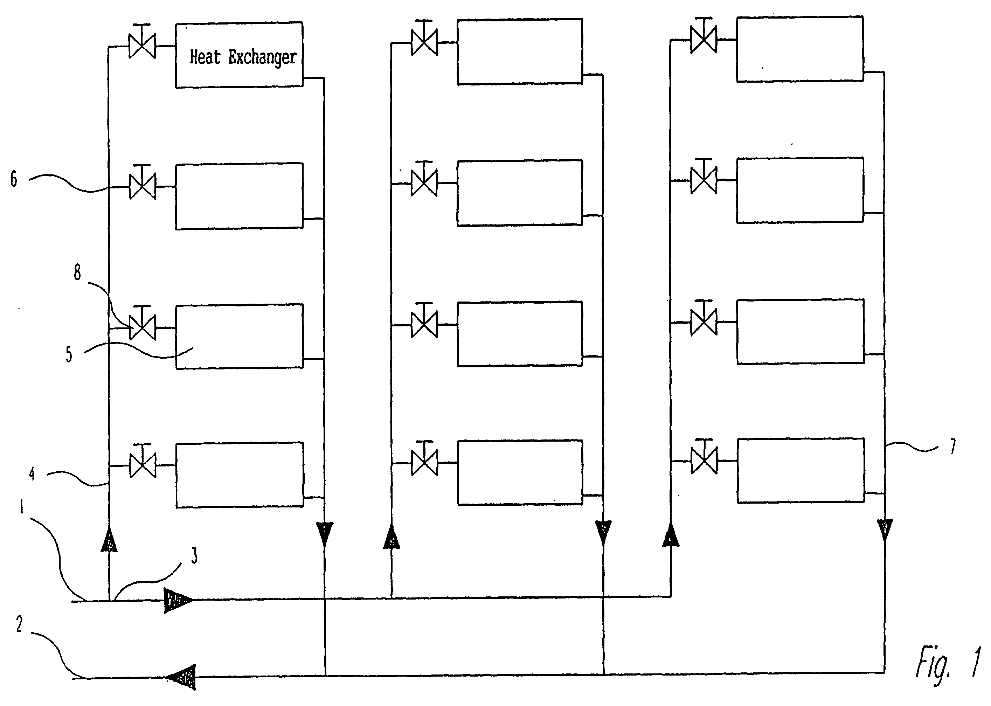

In fig. 1 is shown a double-pipe heating plant, one pipe of which is the main pipe 1 which leads the heat-carrying medium, such as water, from a source of heat, which is not illustrated, in the heating plant, and the second pipe is a return pipe 2 which leads the medium back to the boiler.

From a branch point 3 there extends a first side pipe 4 which leads the medium forward to a number of heat exchangers 5, each of which is connected to the first side pipe 4 at connection points 6 and to the second side pipe 7 which leads the medium back to the return pipe 2.

Each heat exchanger 5 is provided with a valve 8 according to the invention, which is arranged to control the flow of the heat-carrying medium through the respective heat exchangers 5.

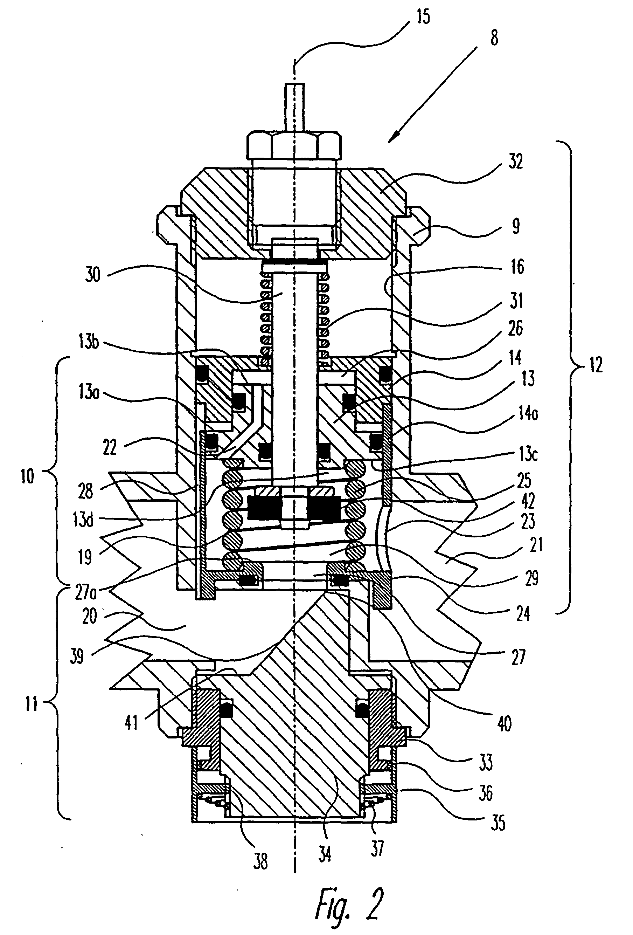

In fig. 2 is shown an embodiment of the valve according to the invention, said embodiment comprising a housing 9 which contains a combination of a differential pressure valve 10, an adjustable pre-setting 11 and a thermostat valve 12.

The differential pressure valve 10 comprises a first, cup-shaped bush 14 which is placed in a bore 16 which is coaxial with the axis 15 of the housing 9. The first cup-shaped bush is connected with a second cup-shaped bush 14a which is arranged in such a manner that the bottoms in the two bushes face away from each other. The bottom in the second cup-shaped bush 14a forms a transverse wall 24 in the valve 8.

In the space between the bottoms in the two cup-shaped bushes 14, 14a, there is housed a piston 13 which is stepped in diameter, of which the part with the smallest diameter lies inside the first cup-shaped bush 14, and the part with the largest diameter is inside the second cup-shaped bush 14a. The step between the two diameters hereby forms a first area 13a on the piston 13 in an annular space at the transition between the two cup-shaped bushes 14, 14a. That part of the piston 13 which is enclosed within the first cup-shaped bush 14 demarcates a space 26, where the area of the end surface of the piston 13 is indicated with the reference figure 13b in the drawing. Furthermore, a helical spring 25 is inserted between the bottom or the transverse wall 24 in the second cup-shaped bush 14a and the front of the piston 13. The spring 25 is secured in a centred manner on the front of the piston 13 by means of an annular recess or stepping-down, whereby radially outside the spring 25 said spring 25 demarcates a circular area indicated by the reference figure 13c, and also a circle with the area 13d inside the spring. From the front radially outside the spring 25, i.e. from the area 13c to the above-mentioned end surface 13b, the piston 13 also has a through-going bore 22.

Transversely to the bore 16, the housing 9 has an inlet 20 and an outlet 21 for the medium, and along the circumference the second cup-shaped bush 14a is provided with a longitudinal channel 28 which extends from the inlet 20 to the above-mentioned circular space with the area 13a on the piston 13.

From fig. 2 it will be clear that a medium which is led in through the inlet 20 will be able to flow through the bore 22 and exercise a pressure against the end surface 13b of the piston 13 in the space 26, so that the piston 13 compresses the spring 25.

The medium can also flow from the inlet 20 through an opening 27 with a seating 27a, which is configured in the bottom or the transverse wall 24 of the second cup-shaped bush 14a, and flow further into the space 29 enclosed within the windings of the spring 25.

The area of the space 19 between the windings of the spring 25 changes in size depending on the length of the spring 25, in that the area is increased when the spring is extended and reduced when the spring 25 is compressed by the piston 13. If the spring is compressed completely together, so that the windings lie up against one another, the area can even be completely closed so that through-flow is prevented.

From the space 19, the medium can flow out of the second cup-shaped bush 14a through an opening 23 which opens out in the outlet 21.

By a suitable dimensioning of the areas 13a, 13b, 13c and 13d of the piston 13 in relation to the pressure of the spring 25, with a displacement of the piston and the consequent changing of the area of the space 19 between the windings of the spring 25, there can be generated a desired differential pressure across the inlet 20 and the thermostat seating 27a with an associated seal 42.

The adjustable pre-setting 11 can be set to a desired through-flow opening by being turned around the axis 15, and can thereafter be locked in its setting. It can, for example, be configured as follows:

In one end of the housing 9 there is screwed a threaded bush 33 in which a cylindrical plug 34 is secured in a manner in which it cannot be displaced in the direction of the axis 15 of the housing 9, but can be turned around said axis. At the free end of the threaded bush 33, there is also provided a bush-shaped setting element 35. In a radial plane, the threaded bush 33 and the setting element 35 have cooperating teeth 36 which extend for a short distance axially. In a locking position for the setting element 35, the teeth 36 prevent a relative turning of the parts 33, 35, whereby the plug 34 is also prevented from turning. On the other hand, in a second position in which the setting element 35, against the pressure of a conical spring 37 which is compressed between a flange on the plug 34 and a contact surface in the setting element 35, is drawn out axially in relation to the threaded bush 33, the engagement between the teeth 36 is terminated. In a second radial plane there are cooperating teeth 38 on the setting element 35 and the plug 34, whereby the setting element 35 can turn the plug in the threaded bush 33 when the setting element 35 is drawn axially out from the threaded bush 33, in that the teeth 38 on the plug 34 have adequate axial extension for this purpose.

That end of the cylindrical plug 34 which faces inwards in the housing 9, lies up against the outer side of the bottom or the transverse wall 24 in the second cup-shaped bush 14a. The plug 34 is configured with an inclined surface 39 which extends from the said end, in that the intersection between the end and the inclined surface 39 extends along a chord 40 on one side of the axis 15 of the plug, extends at an angle through the axis 15 of the plug and ends in a surface 41 which is at right angles to the axis 15.

The inlet 20 has a predetermined area, and in the position of the plug 34 shown in fig. 2 there is unhindered flow through the inlet 20 and the opening 27 in the bottom or the transverse wall 24 of the second cup-shaped bush 14a. By turning the plug 34 at an angle of 180° around its axis in the threaded bush 33, and herewith in relation to the housing 9 and the inlet 20, the inlet 20 will be blocked. It will be clear that the turning of the plug 34 at angles of less than 180° from the shown position will block smaller or greater parts of the inlet 20, hereby making it possible to select a desired area of flow through the inlet 20 and to the opening 27.

The thermostat valve 12 is of commonly known construction. Its arrangement comprises a spindle 30 which is surrounded by a helical spring 31 which with its one end abuts against a locking element 32 in the housing 9, and with its other end against the bottom of the first cup-shaped bush 14 in the housing. Outside the housing 9, the spindle 30 is connected to a not-shown thermostat bellows which can displace the spindle 30 in its longitudinal direction depending on the surrounding temperature and against the pressure from the spring 31. The spindle 30 also has the above-mentioned seal 42 which can close the opening 27 with the seating 27a in the bottom or the transverse wall 24 of the second cup-shaped bush 14a, regardless of the setting of the differential pressure valve 10 and the adjustable pre-setting 11.

## Claims

1. Valve assembly for a system having a heat-carrying medium which flows through a number of heat exchangers (5) in the system including a thermostat valve (12) with a housing (9) comprising an inlet (20) and an outlet (21), a spindle (30) which can be displaced by a thermostat bellows and having a seal (42), and which depending on the expansion/contraction of the thermostat bellows and against the pressure of a spring (31) which surrounds the spindle (30) can respectively close and open an opening (27) with a seating (27a) in a transverse wall (24) in the housing (9) between the inlet (20) and the outlet (21), which valve assembly further includes an adjustable pre-setting, the thermostat valve (12) being arranged to be able to cut off the flow between the unlet (20) and the outlet (21) independently of the adjustable pre-setting (11). **characterized in that** the valve assembly (8) also has a differential pressure controlled piston (13) for the regulation of the differential pressure of the heat-carrying medium across the adjustable pre-setting (11) and the thermostat valve (12), which thermostat valve consists of the seating (27a) and the seal (42), is situated between the inlet (20) and the piston (13)

2. Valve assembly according to claim 1, **characterized in that** the piston (13) of the differential pressure valve (10) is surrounded by a first cup-shaped bush (14) and is herewith connected to a second cup-shaped bush (14a), the bottoms of which face in opposite directions and are disposed in a bore (16) which is coaxial with the axis (15) of the housing (9), that the piston (13) is stepped in diameter, whereby the part with the smallest diameter lies in the first cup-shaped bush (14), and **in that** a channel (22) leads from the front of the piston (13) to the rear of said piston (13).

3. Valve assembly according to claim 2, **characterized in that** a spring (25) is provided between the piston (13) and the bottom or the transverse wall (24) of the second cup-shaped bush (14a) in such a manner that the area of the space (19) between the windings of the spring (25) can be varied depending on the movement of the piston (13), said bottom or transverse wall (24) having the said opening (27) which is limited by the seating (27a).

4. Valve assembly according to claim 3, **characterized in that** the second cup-shaped bush (14a) has on its outer side at least one longitudinal channel (28) which, from the inlet (20), leads to an annular space between the two bushes (14, 14a), in which space at the stepping of the piston (13) there is formed an area (13a), that inside the first cup-shaped bush (14) the rear of the piston has an area (13b), and **in that** the spring (25), at its abutment against the piston (13) inside the second cup-shaped bush (14a), on its outer side demarcates an area (13c) and on its inner side an area (13d).

5. Valve assembly according to claim 1, **characterized in that** the adjustable pre-setting (11) comprises a cylindrical plug (34) which, by a threaded bush (33), is secured in a rotatable manner but lockable in the housing (9), that the plug (34) with the end inside the housing (9) lies up against the bottom or the transverse wall (24) of the second cup-shaped bush (14a), and is configured with an inclined surface (39) which runs from a chord (40) on one side of the axis (15) of the plug (34), extends at an angle through the axis (15) beyond the inlet (20) and ends in a surface (41) which is at right angles to the axis (15).

6. Valve assembly according to claim 5, **characterized in that** the threaded bush (33) is surrounded by a setting element (35), that in a radial plane on the threaded bush (33) and the setting element (35) there are cooperating teeth (36) with a slight axial extension, which in a locking position for the setting element (35) prevent mutual rotation between the threaded bush (33) and the setting element (35), and **in that** the plug (34) and the setting element (35) in a second radial plane have cooperating teeth (38), where the teeth (38) on the plug (33) have a predetermined axial length, so that the setting element (35) in a second position drawn out of the locking position can turn the plug (33) in the housing (9).

7. Valve assembly according to claim 6, **characterized in that** the setting element is held in the locked position by a spring (37) which is inserted between a flange on the plug (33) and a contact surface on the setting element (35).

8. Valve assembly according to claim 1, **characterized in that** the thermostat valve (12) comprises a spindle (30) which extends through the first cup-shaped bush (14) and the piston (13), that the spindle is surrounded by a spring (31) which is compressed between a locking element (32) and the bottom of the first cup-shaped bush (14), and **in that** the spindle (30), on that end which projects into the space which is surrounded by the spring (25), has the said seal (42) which is arranged to lie up against the seating (27a) and close the opening (27).

## Patentansprüche

1. Ventilanordnung für ein System mit einem Wärmeträgermedium, das durch eine Reihe von Wärmetauschem (5) in dem System strömt, die ein Thermostatventil (12) mit einem Gehäuse (9), das einen Einlass (20) und einen Auslass (21) umfasst, einer Spindel (30), die durch einen Thermostatbalg verschoben werden kann und eine Dichtung (42) aufweist, und das je nach Ausdehnung/Zusammenziehen des Thermostatbalgs und gegen den Druck einer Feder (31), die die Spindel (30) umgibt, eine Öffnung (27) mit einem Sitz (27a) in einer Querwand (24) in dem Gehäuse (9) zwischen dem Einlass (20) und dem Auslass (21) verschließen bzw. öffnen kann, enthält, wobei die Ventilanordnung des Weiteren eine verstellbare Voreinstellung enthält und das Thermostatventil (12) den Strom zwischen dem Einlass (20) und dem Auslass (21) unabhängig von der verstellbaren Voreinstellung (11) unterbrechen kann, **dadurch gekennzeichnet, dass** die Ventilanordnung (8) des Weiteren einen differenzialdruckgesteuerten Kolben (13) aufweist, der den Differenzialdruck des Wärmeträgermediums über die verstellbare Voreinstellung (11) und das Thermostatventil (12) reguliert, wobei das Thermostatventil aus dem Sitz (27a) und der Dichtung (42) besteht, und zwischen dem Einlass (20) und dem Kolben (13) angeordnet ist.

2. Ventilanordnung nach Anspruch 1, **dadurch gekennzeichnet, dass** der Kolben (13) des Differenzdruckventils (10) von einer ersten schalenförmigen Buchse (14) umgeben ist, und darüber mit einer zweiten schalenförmigen Buchse (14a) verbunden ist, deren Unterseiten in entgegengesetzte Richtungen gewandt sind und in einer Bohrung (16) angeordnet sind, die koaxial zur Achse (15) des Gehäuses (9) ist, dass der Kolben (13) einen abgestuften Durchmesser aufweist, wobei der Teil mit dem kleinsten Durchmesser in der ersten schalenförmigen Buchse ('14) liegt, und dadurch, dass ein Kanal (22) vom vorderen Ende des Kolbens (13) zum hinteren Ende des Kolbens (13) führt.

3. Ventilanordnung nach Anspruch 2, **dadurch gekennzeichnet, dass** eine Feder (25) zwischen dem Kolben (13) und dem Boden bzw. der Querwand (24) der zweiten schalenförmigen Buchse (14a) so angeordnet ist, dass der Bereich des Zwischenraums (19) zwischen den Windungen der Feder (25) in Abhängigkeit von der Bewegung des Kolbens (13) verändert werden kann, wobei der Boden bzw. die Querwand (24) die Öffnung (27) aufweist, die durch den Sitz (27a) begrenzt ist.

4. Ventilanordnung nach Anspruch 3, **dadurch gekennzeichnet, dass** die zweite schalenförmige Buchse (14a) an ihrer Außenseite wenigstens einen Längskanal (28) aufweist, der vom Einlass (20) zu einem ringförmigen Raum zwischen den zwei Buchsen (14, 14a) führt, wobei in dem Raum am Absatz des Kolbens (13) ein Bereich (13a) ausgebildet ist, dass im Inneren der ersten schalenförmigen Buchse (14) das hintere Ende des Kolbens einen Bereich (13b) aufweist, und dass die Feder (25) dort, wo sie an dem Kolben (13) anliegt, im Inneren der zweiten schalenförmigen Buchse (14a) an ihrer Außenseite einen Bereich (13c) und an ihrer Innenseite einen Bereich (13d) abgrenzt.

5. Ventilanordnung nach Anspruch 1, **dadurch gekennzeichnet, dass** die verstellbare Voreinstellung (11) einen zylindrischen Stopfen (34) umfasst, der mittels einer mit Gewinde versehenen Buchse (33) drehbar, jedoch arretierbar in dem Gehäuse (9) befestigt ist, dass der Stopfen (34) mit dem Ende im Inneren des Gehäuses (9) an dem Boden bzw. der Querwand (24) der zweiten schalenförmigen Buchse (14a) anliegt und mit einer geneigten Fläche (39) versehen ist, die von einer Sehne (40) auf einer Seite der Achse (15) des Stopfens (34) verläuft, sich in einem Winkel durch die Achse (15) über den Einlass (20) hinaus erstreckt und in einer Fläche (41) endet, die rechtwinklig zu der Achse (15) ist.

6. Ventilanordnung nach Anspruch 5, **dadurch gekennzeichnet, dass** die mit Gewinde versehene Buchse (33) von einem Einstellelement (35) umgeben ist, dass in einer radialen Ebene an der mit Gewinde versehenen Buchse (33) und dem Einstellelement (35) zusammenwirkende Zähne (36) mit einer geringen axialen Ausdehnung vorhanden sind, die in einer Arretierposition für das Einstellelement (35) Drehung der mit Gewinde versehenen Buchse (33) und des Einstellelementes (35) zueinander verhindern, und dass der Stopfen (34) und das Einstellelement (35) in einer zweiten radialen Ebene zusammenwirkende Zähne (38) aufweisen, wobei die Zähne (38) an dem Stopfen (33) eine vorgegebene axiale Länge haben, so dass das Einstellelement (35) in einer zweiten Position, aus der Arretierposition herausgezogen, den Stopfen (33) in dem Gehäuse (9) drehen kann.

7. Ventilanordnung nach Anspruch 6, **dadurch gekennzeichnet, dass** das Einstellelement durch eine Feder (37), die zwischen einen Flansch an dem Stopfen (33) und eine Kontaktfläche an dem Einstellelement (35) eingeführt ist, in der arretierten Position gehalten wird.

8. Ventilanordnung nach Anspruch 1, **dadurch gekennzeichnet, dass** das Thermostatventil (12) eine Spindel (30) umfasst, die sich durch die erste schalenförmige Buchse (14) und den Kolben (13) hindurch erstreckt, dass die Spindel von einer Feder (31) umgeben ist, die zwischen einem Arretierelement (32) und dem Boden der ersten schalenförmigen Buchse (14) zusammengedrückt wird, und dass die Spindel (30) an dem Ende, das in den Raum, der von der Feder (25) umgeben wird, vorsteht, die Dichtung (42) aufweist, die an dem Sitz (27a) anliegt und die Öffnung (27) verschließt.

## Revendications

1. Vanne pour un système ayant un milieu caloporteur qui circule à travers une pluralité d'échangeurs de chaleur (5) dans le système, incluant une soupape thermostatique (12) avec un boîtier (9) comportant une entrée (20) et une sortie (21), une tige (30) qui peut être déplacée par un soufflet thermostatique et porte un obturateur (42) et qui peut, en fonction de la dilatation / contraction du soufflet thermostatique et contre la pression d'un ressort (31) entourant la tige (30), respectivement fermer et ouvrir un orifice (27) pourvu d'un siège (27a) dans une paroi transversale (24) du boîtier (9) entre l'entrée (20) et la sortie (21), la dite vanne incluant en outre un dispositif de préréglage ajustable, la soupape thermostatique (12) étant agencée de manière à pouvoir interrompre l'écoulement entre l'entrée (20) et la sortie (21) indépendamment du dispositif de préréglage ajustable (11), **caractérisée en ce que** la vanne (8) comprend également un piston commandé par pression différentielle (13) pour la régulation de la pression différentielle du milieu caloporteur à travers le dispositif de préréglage ajustable (11) et la soupape thermostatique (12), la dite soupape thermostatique étant constituée par le siège (27a) et l'obturateur (42) et étant située entre l'entrée (20) et le piston (13).

2. Vanne selon la revendication 1, **caractérisée en ce que** le piston (13) de la soupape à pression différentielle (10) est entouré par un premier manchon en forme de tasse (14) et est relié par l'intermédiaire de celui-ci à un deuxième manchon en forme de tasse (14a), les fonds des dits manchons étant tournés dans des directions opposées et étant disposés dans un alésage (16) qui est coaxial à l'axe (15) du boîtier (9), **en ce que** le piston (13) est épaulé en diamètre, de sorte que la partie de plus petit diamètre se trouve dans le premier manchon en forme de tasse (14), et **en ce qu'**un canal (22) conduit de l'avant du piston (13) à l'arrière du dit piston (13).

3. Vanne selon la revendication 2, **caractérisée en ce qu'**un ressort (25) est prévu entre le piston (13) et le fond ou la paroi transversale (24) du deuxième manchon en forme de tasse (14a) d'une manière telle que la grandeur de l'espace (19) entre les spires du ressort (25) peut varier en fonction du mouvement du piston (13), le dit fond ou la paroi transversale (24) présentant le dit orifice (27) qui est délimité par le siège (27a).

4. Vanne selon la revendication 3, **caractérisée en ce que** le deuxième manchon en forme de tasse (14a) présente, sur son côté extérieur, au moins un canal longitudinal (28) qui conduit de l'entrée (20) à un espace annulaire entre les deux manchons (14, 14a), une surface (13a) étant définie dans cet espace à l'endroit de l'épaulement du piston (13), **en ce que**, à l'intérieur du premier manchon en forme de tasse (14), l'arrière du piston présente une surface (13b), et **en ce que** le ressort (25), à l'endroit de sa butée contre le piston (13) à l'intérieur du deuxième manchon en forme de tasse (14a), délimite une surface (13c) sur son côté extérieur et une surface (13d) sur son côté intérieur.

5. Vanne selon la revendication 1, **caractérisée en ce que** le dispositif de préréglage ajustable (11) comprend un bouchon cylindrique (34) qui est fixé par un manchon taraudé (33) d'une manière tournante mais verrouillable dans le boîtier (9), **en ce que** le bouchon (34) s'applique par l'extrémité située à l'intérieur du boîtier (9) contre le fond ou la paroi transversale (24) du deuxième manchon en forme de tasse (14a) et il est configuré de manière à présenter une surface inclinée qui part d'une corde (40) sur un côté de l'axe (15) du bouchon (34), s'étend de façon inclinée au-delà de l'axe (15) et au-delà de l'entrée (20), et se termine dans une surface (41) qui est perpendiculaire à l'axe (15).

6. Vanne selon la revendication 5, **caractérisée en ce que** le manchon taraudé (33) est entouré par un élément de réglage (35), **en ce que**, dans un plan radial sur le manchon taraudé (33) et l'élément de réglage (35), il est prévu des dents coopérantes (36) de petite longueur axiale qui empêchent, dans une position de verrouillage de l'élément de réglage (35), une rotation relative entre le manchon taraudé (33) et l'élément de réglage (35), et **en ce que** le bouchon (34) et l'élément de réglage (35) dans un deuxième plan radial comportent des dents coopérantes (38), les dents (38) sur le bouchon (33) ayant une longueur axiale prédéterminée, de sorte que l'élément de réglage (35) dans une deuxième position reculée de la position de verrouillage peut faire tourner le bouchon (33) dans le corps (9).

7. Vanne selon la revendication 6, **caractérisée en ce que** l'élément de réglage est maintenu dans la position verrouillée par un ressort (37) qui est inséré entre une collerette du bouchon (33) et une surface de contact sur l'élément de réglage (35).

8. Vanne selon la revendication 1, **caractérisée en ce que** la soupape thermostatique (12) comprend une tige (30) qui s'étend à travers le premier manchon en forme de tasse (14) et le piston (13), **en ce que** la tige est entourée par un ressort (31) qui est comprimé entre un élément de blocage (32) et le fond du premier manchon en forme de tasse (14), et **en ce que** la tige (30), à l'extrémité qui fait saillie dans l'espace entouré par le ressort (25), porte le dit obturateur (42) qui est agencé de manière à s'appliquer contre le siège (27a) et à fermer l'orifice (27).
